(19) Europäisches Patentamt
European Patent Office
Office européen des brevets

(11) **EP 3 872 959 A1**

(12) **EUROPEAN PATENT APPLICATION**

(43) Date of publication:
**01.09.2021 Bulletin 2021/35**

(51) Int Cl.:
*H02J 50/60* (2016.01)          *H05B 6/10* (2006.01)

(21) Application number: **21159352.0**

(22) Date of filing: **25.02.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.02.2020 KR 20200024272**

(71) Applicant: **LG Electronics Inc.**
**Seoul 07336 (KR)**

(72) Inventors:
• **Seong, Hojae**
  **Seoul 08592 (KR)**
• **Moon, Hyunwook**
  **Seoul 08592 (KR)**
• **Ok, Seungbok**
  **Seoul 08592 (KR)**

(74) Representative: **Ter Meer Steinmeister & Partner Patentanwälte mbB**
**Nymphenburger Straße 4**
**80335 München (DE)**

(54) **WIRELESS POWER TRANSMISSION APPARATUS FOR INDUCTION HEATING AND CONTROL METHOD THEREOF**

(57)    A wireless power transmission apparatus for induction heating includes a working coil configured to change a mode depending on selection of a user, to change an operation frequency depending on the mode, and to induction-heat a target object, or to wirelessly transmit power to the target object, an inverter that is turned on and off depending on the operation frequency and configured to generate the power, and a controller configured to receive a load voltage from the target object during wireless power transfer, to compensate for the load voltage, and to determine whether a foreign object is present in the working coil when the user selects a wireless power transmission mode.

FIG. 1

**Description**

CROSS-REFERENCE TO THE RELATED APPLICATION

This application claims priority from Korean Patent Application No. 10-2020-0024272, filed on February 27, 2020, in the Korean Intellectual Property Office.

BACKGROUND OF THE INVENTION

**1. Field of the invention**

The present invention relates to a wireless power transmission apparatus, and more particularly, to a wireless power transmission apparatus for induction heating and a control method thereof.

**2. Description of the Related Art**

Wireless charging refers to a method of charging a device by wirelessly transmitting power through the atmosphere instead of a method of charging a device by transmitting power by wire.

According to the basic principle of wireless charging, when alternating current (AC) flows in a transmission coil, a battery is charged by forming a magnetic field around a transmission coil, allowing AC to flow in a reception coil due to influence of the magnetic field, and rectifying the AC.

Various small-size kitchen utensils used in a kitchen, that is, small home appliances require power supply, and thus, receive power by connecting an electric cord (power connection cable) that is separately included in electronic devices to a socket. In this case, there is a problem in that a plurality of electric cords adversely affects management, safety, or space utilization.

Thus, recently, the demand for wireless power charging of small home appliances used in a kitchen has rapidly increased.

Devices that need to be heated using induced current among small home appliances used in a kitchen have increasingly been spread.

Such a heating device using induced current uses an induction method of heating the device via electron induction by generating a magnetic field and is operated in the same way as an electric range.

That is, a general electron induction heating device allows high-frequency current to flow in a working coil or heating coil installed therein.

When the high-frequency current flows in the working coil or the heating coil, a strong line of magnetic force is generated. The line of magnetic force generated in the working coil or the heating coil forms eddy current while being transmitted through a cooking tool. Thus, as eddy current flows in a cooking tool, heat is generated to heat a container itself, and materials in the container are heated as the container is heated.

Such an induction heating device is disclosed in detail in Korean Patent Publication No. 10-2016-0123672.

As disclosed in Korean Patent Publication No. 10-2016-0123672, there is the increasing demand for a multi-functional wireless power transmission device that is capable of performing wireless charging as well as induction heating depending on a type of a small home appliance used in a kitchen.

The multi-functional wireless power transmission device is capable of performing induction heating or wireless power transmission by changing a frequency using one working coil or heating coil according to mode selection of a user.

When induction heating or wireless power transmission is performed on a target small home appliance of the multi-functional wireless power transmission device, it is required that a reception coil and working coil of the target small home appliance are aligned with each other.

That is, when the two coils that perform wireless power transfer are not aligned with each other and are eccentrically arranged, power transmission efficiency is remarkably lowered.

To this end, technologies of determining eccentricity and providing an alarm therefor or compensating for this in wireless power transfer are proposed.

For example, Korean Patent Registration No. 17-6449681 discloses a battery charging system for a vehicle through wireless power transfer, and discloses that information on a charging state of a reception side is received, and when a charging state value is less than a reference value, an alignment state is adjusted by moving a coil of the reception to achieve a constancy state.

However, in the case of the conventional art, it is required to change the coil of the reception side for alignment. However, in the case of wireless power transfer of a small home appliance, it is required to continuously provide an alarm to a user to match a state of transmission/reception coils with constancy, and alignment state match is a factor that impedes use convenience of a wireless small home appliance.

US Patent Registration No. 8912686 discloses that a device formed of a magnetic component of a reception side is automatically aligned with a transmission coil by allowing DC current to flow when an alignment state of transmission/reception coils is not matched in a wireless power transmission system.

As such, when a reception coil includes a magnetic component, a metallic foreign object is attached thereto together, and thus, there is a risk of ignition or fuming due to a magnetic field generated during wireless power transfer.

In addition, it is required to also detect whether a foreign object is present between a target object and a working coil, to provide an alarm thereof, to remove the foreign object, and then to transmit power.

When a foreign object is present, there is a problem in terms of degradation in power transfer, and a risk of ignition depending on a material of a foreign object is inherent.

To this end, Korean Patent No. 2017-0024413A discloses a wireless power transmission apparatus for detecting a foreign object. According to such prior art, a signal generating circuit is configured to generate a detection signal of a specific frequency and receives a signal to generate a magnetic field in a source coil, and when a foreign object is present in a source coil, a detection coil detects the signal and transmits the signal to a controller.

That is, in order to detect a foreign object, a plurality of detection coils is additionally configured, and there is an additional need for a signal generating circuit for detection. Thus, there is a need for a separate auxiliary circuit therefor to consume costs and space.

In Korean Patent No. 2017-0099804A, a variation amount of a resonance frequency is calculated to detect a foreign object, and increase in the resonance frequency due to reduction in inductance generated when a foreign object is present is detected. Thus, whether a foreign object is present is determined via change in the resonance frequency.

However, in the case of a conventional mobile charging system, a transmission coil has a small size, and a change in frequency due to an impedance difference is easily detected because impedance is remarkably increased when a foreign object is present, but in the case of a home appliance or a vehicle, a transmission coil has a large size, but a variation in impedance due to a relatively small foreign object is remarkably reduce, and thus, there is a limit in determining whether a foreign object is present.

[Cited Reference]

[Patent Document]

Korean Patent Registration No. 17-6449681 (Registered on July 27, 2017)
US Patent No. 8912686 (Registered on December 16, 2014)
Korean Patent Publication No. 2017-0024413 (Published on August 31, 2018)
Korean Patent Publication No. 2017-0099804 (Published on February 15, 2019)

## SUMMARY OF THE INVENTION

A first objective of the present invention is to provide a wireless power transmission apparatus for determining whether eccentricity occurs in a small home appliance as a target object, compensating for this, and performing wireless power transfer (WPT) when a multi-functional wireless power transmission device using one working coil is in a wireless power transmission mode. That is, the present invention provides a wireless power transmission apparatus for compensating for an eccentricity degree and transmitting power rather than inducting change in a position of a target object of a reception side even if eccentricity occurs as disclosed in Korean Patent Registration No. 17-6449681 and US Patent Registration No. 8912686.

A second objective of the present invention is to provide a wireless power transmission apparatus for detecting a foreign object irrespective of whether eccentricity occurs with a reception coil of a positioned target small home appliance when user mode selection is a wireless power transmission mode.

As such, a third objective of the present invention is to provide a wireless power transmission apparatus for determining whether a foreign object is present irrespective of a wall voltage, that is, the amplitude of commercially available power provided to a wireless power transmission apparatus when a wireless power transmission mode is selected.

That is, the present invention provides a wireless power transmission apparatus for determining whether a foreign object is present irrespective of whether eccentricity occurs or the amplitude of commercially available power to detect a foreign object without need for a separate sensor for detection as disclosed in Korean Patent Publication No. 2017-0024413 and Korean Patent Publication No. 2017-0099804.

A fourth objective of the present invention is to provide a wireless power transmission apparatus for providing an alarm to a user during wireless power transfer when a wireless power transmission mode is selected, if a target object is a small home appliance having a reception coil and excessive eccentricity occurs between the corresponding reception coil and a working coil of a transmission side.

In addition, a fifth objective of the present invention is to provide a wireless power transmission apparatus for providing a user alarm by determining whether a foreign object is present as well as whether eccentricity occurs during wireless power transfer.

At least one of these objects is solved by the subject-matter of the independent claims. Further advantageous embodiments and refinements are described in the respective dependent claims.

A wireless power transmission apparatus according to embodiments of the present disclosure may determine whether a foreign object is present between the wireless power transmission apparatus and a target object to which wireless power is to be transmitted. Also, the wireless power transmission apparatus may determine an eccentricity degree between a working coil of the wireless power transmission apparatus and a reception coil of the target object. Herein, power transmission and power transfer are equally used.

The target object may be an electronic product or appliance, a (small) home appliance having a reception coil. The foreign object may be a metal object, a chopstick, a spoon, or similar object.

The wireless power transmission apparatus may be integrated into a kitchen stove, for example under an upper plate of the kitchen stove, or the like. For example, the target object may be positioned on the upper plate. Thus, the working coil of the wireless power transmission apparatus and the reception coil of the target object may overlap with each other.

When determining whether a foreign object is present, a reduction in a load voltage due to the foreign object is determined. The present disclosure is based on the idea of performing compensation of the load voltage for removing all other factors of a voltage reduction to ensure reliability of the determination. In particular, the wireless power transmission apparatus may determine whether an eccentricity occurs between the working coil and the reception coil of the target object, and may compensate for this.

Thus, whether a foreign object is present may be reliably determined, and when the foreign object is present, an operation of the wireless power transmission apparatus may be stopped and a user alarm may be provided for removing the foreign object. Thus, wireless power transfer may be safely performed.

Therefore, a difference in an input voltage and an eccentricity degree may be compensated for and then a foreign object may be detected, and thus, the foreign object may be reliably detected irrespective of the amplitude of the input voltage and the eccentricity degree, thereby ensuring reliability and operation stability.

The wireless power transmission apparatus may provide an alarm to a user during wireless power transfer when a wireless power transmission mode is selected, if a target object is a small home appliance having a reception coil and excessive eccentricity occurs between the corresponding reception coil and the working coil. In this case, whether a foreign object is present as well as whether eccentricity occurs may be determined, and thus, a user alarm may also be provided.

The wireless power transmission apparatus may function in an induction heating mode for heating the target object and may function in a wireless power transmission mode for wirelessly transmitting power to a target object using the receiving coil of the target object.

The determining whether a foreign object is present and the determining of the eccentricity degree may be carried out during a preparation period prior to a normal operation mode, wherein the normal operation mode may be a mode of wirelessly transmitting power from the wireless power transmission apparatus to the target object. In accordance with an aspect of the present disclosure, a wireless power transmission apparatus for induction heating includes a working coil configured to change a mode depending on selection of a user, and to induction-heat a target object depending on the mode, or to wirelessly transmit power to the target object, an inverter that is turned on and off depending on the operation frequency and configured to generate the power, and a controller configured to receive a load voltage from the target object during wireless power transfer, to compensate for the load voltage, and to determine whether a foreign object is present in the working coil when the user selects a wireless power transmission mode. The controller may be configured to perform a method according to any one of the herein described embodiments.

The controller may include the preparation period prior to a normal mode for performing the wireless power transfer, and determines whether the foreign object is present in the working coil in the preparation period.

The controller may receive information on the load voltage from the target object while driving the inverter at a specific operation frequency, may compensate for the load voltage depending on a current input voltage, and may determine whether the foreign object is present depending on the compensated load voltage.

The current input voltage may be recalculated as a first reference input voltage, compensation for removing variation in the load voltage with respect to the current input voltage may be performed, and the compensated load voltage may be calculated.

The controller may compensate for an eccentricity degree between the working coil and a reception coil of the target object with respect to the compensated load voltage, and may calculate a last load voltage. The last load voltage may also be denoted with final load voltage. The final load voltage may be calculated by additionally compensating the eccentricity to the load voltage compensated for each reference input voltage. Therefore, the final load voltage may be calculated for both or at least one of the first reference input voltage and the second reference input voltage. Compensation for the second reference input voltage may be optional.

The controller may determine whether the foreign object is present based on the last load voltage.

When determining that the foreign object is present based on a last load voltage with respect to a first reference input voltage, the controller may further calculate a last load voltage with respect to a second reference input voltage and may determine whether a foreign object is present.

When both the last load voltage with respect to the first reference input voltage and the last load voltage with respect to the second reference input voltage are outside a predetermined range, the controller may determine that the foreign object is present.

Ranges of determining that the foreign object is present with respect to the last load voltage with respect to the first reference input voltage and the last load voltage with respect to the second reference input voltage may be different from each other.

The wireless power transmission apparatus may further include an upper glass on which the target object is positioned, and a user input unit configured to guide mode selection from the user.

In accordance with another aspect of the present invention, a method of driving a wireless power transmission apparatus for induction heating including a working coil configured to change a mode depending on selection of a user, and to induction-heat a target object depending on the mode, or to wirelessly transmit power to the target object, the method including checking that selection information of the user is a wireless power transmission mode, a preparation operation of receiving a load voltage from the target object while driving a wireless inverter at a predetermined operation frequency, compensating for the load voltage, and determining whether a foreign object is present in the working coil when the user selects a wireless power transmission mode, and a normal mode operation of wirelessly transmitting power to the target object. The wireless power transmission apparatus may be a wireless power transmission apparatus according to any one of the herein described embodiments.

The preparation operation may include receiving the load voltage from the target object while driving the inverter at the predetermined operation frequency, compensating for the load voltage based on a current input voltage, and determining whether the foreign object is present depending on the compensated load voltage.

The preparation operation may include recalculating the current input voltage as a first reference input voltage, performing compensation for removing variation in the load voltage with respect to the current input voltage, and calculating the compensated load voltage. That is, when the input voltage (e.g. common voltage-wall voltage) is different from a set voltage or the reference voltage, it may be converted into a set first reference input voltage, and the load voltage may be compensated by the difference according to the conversion.

The preparation operation may include compensating for an eccentricity degree between the working coil and a reception coil of the target object with respect to the compensated load voltage, and calculating a last load voltage.

The preparation operation may include determining whether the foreign object is present based on the last load voltage.

The preparation operation may include, when determining that the foreign object is present based on a last load voltage with respect to the first reference input voltage, further calculating a last load voltage with respect to a second reference input voltage and determining whether a foreign object is present.

The preparation operation may include, when both the last load voltage with respect to the first reference input voltage and the last load voltage with respect to the second reference input voltage are outside a predetermined range, determining that the foreign object is present.

Ranges of determining that the foreign object is present with respect to the last load voltage with respect to the first reference input voltage and the last load voltage with respect to the second reference input voltage may be different from each other.

The preparation operation may include calculating a deviation in the load voltage with respect to the first reference input voltage based on data of the load voltage of the target object of a variation in the input voltage with respect to the specific operation frequency and calculating the compensated load voltage according to a function between the deviation in the load voltage and the input voltage.

The preparation operation may include compensating for a value of resonance current with respect to the first reference input voltage, calculating the deviation in the compensated load voltage with respect to the first eccentricity degree, and calculating the last load voltage according to a function between the compensated resonance current and the deviation in the compensated load voltage.

The method may further include, when determining that the foreign object is present in the preparation operation, providing a user alarm and stopping an operation of an inverter.

## BRIEF DESCRIPTION OF THE DRAWINGS

The above and other objects, features and other advantages of the present invention will be more clearly understood from the following detailed description taken in conjunction with the accompanying drawings, in which:

FIG. 1 is an upper perspective view of a wireless power transmission apparatus for induction heating according to an embodiment of the present invention;
FIG. 2 is a cross-sectional view of the wireless power transmission apparatus for induction heating of FIG. 1;
FIG. 3 is a circuit diagram for explaining an induction heating state according to an embodiment of the present invention;
FIG. 4 is a circuit diagram for explaining wireless power transfer (WPT) of a wireless power transmission apparatus for induction heating according to an embodiment of the present invention;
FIG. 5 is a diagram showing a configuration of a target object at a reception side according to an embodiment of the present invention;
FIG. 6 is a state diagram showing an alignment state between a reception coil and a working coil;
FIG. 7 is a schematic flowchart of a mode of a wireless power transmission apparatus for induction heating according to an embodiment of the present invention;
FIG. 8 is a diagram showing a structure of a transmission apparatus and a reception apparatus with respect to the flowchart of FIG. 7;
FIG. 9 is a flowchart showing an operation of determining eccentricity and a foreign object during power transfer;
FIGs. 10A and 10B are graphs showing a compensation method depending on eccentricity; and
FIGs. 11A to 11C are graphs showing eccentricity compensation.

## DETAILED DESCRIPTION OF THE PREFERRED EMBODIMENTS

Terms indicating directions, such as "front (F)/rear (R)/left (Le)/ right (Ri)/up (U)/down (D)" used below are defined based on the accompanying drawings, but they are used only to promote a clear understanding of the present invention, and the definition of directions is changed according to a reference.

Terms such as "first" and "second" are used herein merely for the purpose of distinguishing one constituent element from another constituent element, and do not define the order, importance, or master-servant relationship of components. For example, it may be possible to embody the invention so as to include only the second component without the first component.

Components in the following drawings may be exaggerated, omitted, or schematically illustrated for convenience and clarity of explanation. The sizes and areas of the components do not accurately reflect their actual sizes.

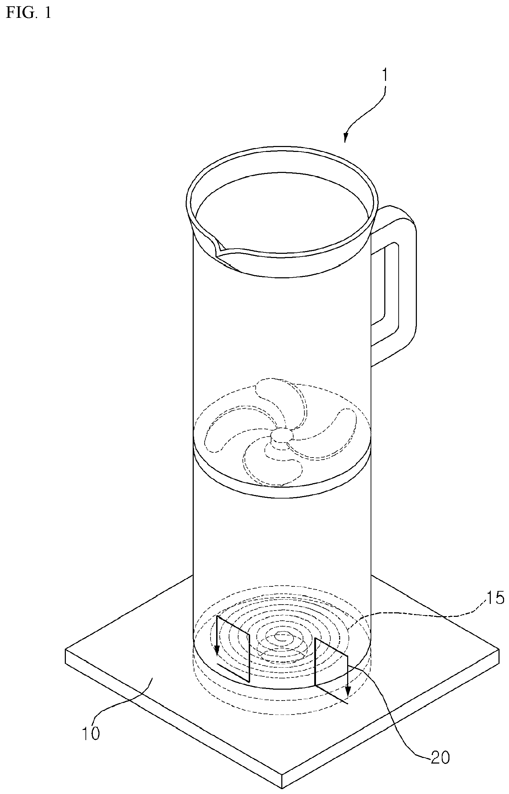

In addition, angles and directions used in description of the configuration of the present invention are based on the accompanying drawings. If a reference or a positional relationship between angles is not clearly set forth in the description of the configuration in the specification, the related drawings are to be referred to.
Hereinafter, a wireless power transmission apparatus for induction heating will be described in detail with reference to FIGs. 1 to 4.

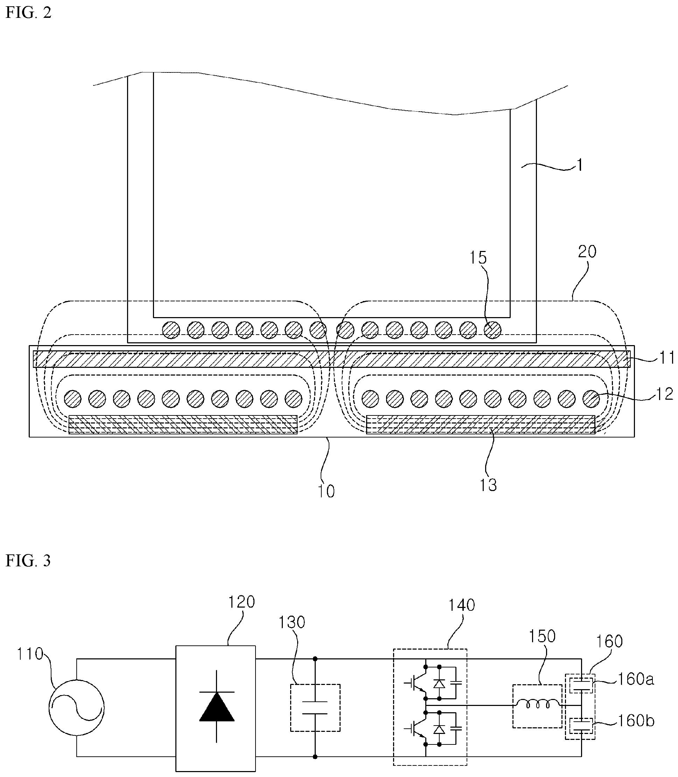

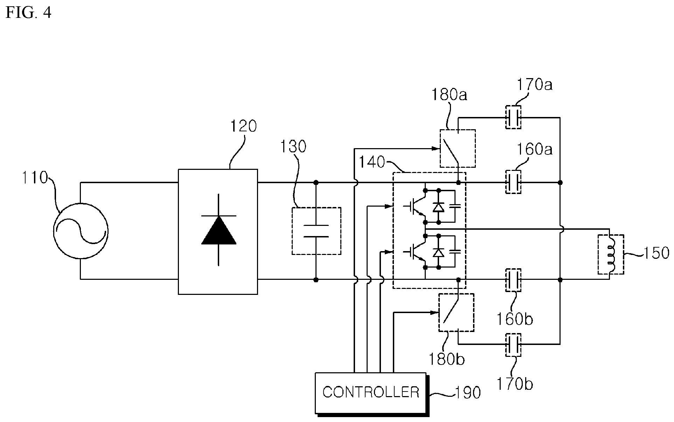

FIG. 1 is an upper perspective view of a wireless power transmission apparatus for induction heating according to an embodiment of the present invention. FIG. 2 is a cross-sectional view of the wireless power transmission apparatus for induction heating of FIG. 1. FIG. 3 is a circuit diagram for explaining an induction heating state according to an embodiment of the present invention. FIG. 4 is a circuit diagram for explaining wireless power transfer (WPT) of a wireless power transmission apparatus for induction heating according to an embodiment of the present invention.

Referring to FIGs. 1 and 2, a target object 1 may be positioned on a wireless power transmission apparatus 10. The wireless power transmission apparatus 10 may heat the target object 1 positioned thereon or may wirelessly transmit power to the target object 1.

The target object 1 may be a small home appliance having a reception coil 15, a small home appliance that does not have the reception coil 15, a general heating cooking container that is not an electronic product, or a foreign object.

The small home appliance having the reception coil 15 may wirelessly receive power using the reception coil 15 through the wireless power transmission apparatus 10 and may perform a main operation using the corresponding power, and may be for example, a wireless blender or a wireless oven toaster.

The small home appliance that does not have the reception coil 15 may be a home appliance that is directly heated by generating a magnetic field through a working coil 12, that is, a transmission coil of the wireless power transmission apparatus 10, and may be an electronic product that is not a general cooking container. An example thereof may be a wireless electric kettle or a wireless electric rice cooker, and the small home appliance that does not have the reception coil 15 may include a pickup coil for power supply to a module that requires driving power from a region for performing a main operation, that is, a region except for a region that receives heat and performs a function. The pickup coil may be positioned away from a region corresponding to the working coil 12 that is a transmission coil, and may wirelessly receive power and may supply power to a module, for example, a control module such as a communication module, an interface, or a display.

The general cooking container may refer to a container including an electrical resistance component that is to be heated by a magnetic field 20 generated from the working coil 12 and through which the magnetic field 20 passes. When a material of the cooking container includes an electrical resistance component, the magnetic field 20 may generate eddy current to the cooking container. Eddy current may heat the heating container itself, and the heat may be conducted and transmitted to an internal side of the cooking container. Thus, contents in the cooking container may be cooked.

When the foreign object is positioned at a position of the target object 1, the foreign object tends to be a material having an electrical resistance component that impedes wireless power transfer (WPT) and may be an iron bar such as a spoon or a chopstick.

The wireless power transmission apparatus 10 may function as an electronic induction heating apparatus or a wireless power transmission apparatus according to user selection.

That is, the wireless power transmission apparatus 10 may function in an induction heating mode for heating a general heating container or may function in a wireless power transmission mode for wirelessly transmitting power to a small home appliance that has or does not have the reception coil 15 with respect to one working coil 12 according to user selection.

The multi-functional wireless power transmission device 10 may include an upper glass 11 and a casing (not shown) including at least on working coil 12, as shown in FIG. 2. First, components included in the wireless power transmission apparatus 10 will be described in detail.

The upper glass 11 may protect an internal part of the wireless power transmission apparatus 10 and may support the target object 1. In detail, the upper glass 11 may be formed of tempered glass of a ceramic material obtained by synthesizing various minerals. Thus, the upper glass 11 may protect an internal part of the wireless power transmission apparatus 10 from the outside. The upper glass 11 may support the target object 1 positioned thereon. Thus, the target object 1 may be positioned on the upper glass 11.

The working coil 12 may wirelessly transmit power to the target object 1 depending on the type of the target object 1 or user mode selection or may generate a magnetic field for heating, and at least one working coil 12 may be configured according to a design. In this case, a region in which the target object 1 is disposed may be determined depending on each coil 12.

A user input unit (not shown) for determining a mode of the wireless power transmission apparatus may be disposed at one side of the upper glass 11.

In detail, the working coil 12 may be disposed below the upper glass 11. Current may or may not flow in the working coil 12 depending on power on/off of the wireless power transmission apparatus 10. When current flows in the working coil 12, the amount of current flowing in the working coil 12 may also vary depending on the mode and output of the wireless power transmission apparatus 10.

When current flows in the working coil 12, the working coil 12 may generate the magnetic field 20. As the amount of current flowing in the working coil 12 is increased, the magnetic field 20 may be more largely generated.

A direction of the magnetic field 20 generated by the working coil 12 may be determined depending on a direction of the current flowing in the working coil 12. Thus, when alternating current (AC) flows in the working coil 12, the direction of the magnetic field 20 may be converted by a frequency of the AC. For example, when AC of 60 Hz flows in the working coil 12, the direction of the magnetic field may be converted 60 times per second.

A driving module (not shown) that is electrically connected to the user input unit and the working coil 12, receives a voltage and current from a commercially available power source, converts the received voltage and current, and supplies power to the working coil 12 according to user input may be disposed in the casing.

The driving module may be configured in the form of a plurality of chips installed on one printed circuit board without being limited thereto or may be configured as one integrated chip.

The wireless power transmission apparatus 10 may include ferrite 13 therein and may protect the driving module therein.

That is, the ferrite 13 may function as a shield that blocks influence of the magnetic field generated in the working coil 12 or an electromagnetic field generated outside the working coil 12 on the driving module in the wireless power transmission apparatus 10.

To this end, the ferrite 13 may be formed of a material with very high permeability. The ferrite 13 may guide the magnetic field introduced into the wireless power transmission apparatus 10 to flow through the ferrite 13 rather than being discharged.

Although FIGs. 1 and 2 show the wireless power transmission apparatus 10 including at least one working coil 12, the wireless power transmission apparatus 10 include two to four working coils 12 in a general home.

The respective working coils 12 may have different sizes, and current of specific frequency may flow in each coil 12 through inverter-driving under control of the driving module, and thus, in the induction heating mode, target power corresponding to a firepower level selected by a user may be generated and heat corresponding to the target power may be generated.

In the wireless power transmission mode, current of different frequencies may flow through inverter-driving under control of the driving module, and thus, power may be wirelessly transmitted to a small home appliance.

To this end, the respective working coils 12 may be connected to inverters in the driving module, and the plurality of working coils 12 may be connected in parallel or series to each other by a switch and may be connected to one inverter.

When the corresponding wireless power transmission apparatus 10 is operated in the induction heating mode according to user selection, a magnetic field may be generated by current of a predetermined frequency and may be transmitted through a heating container positioned on the upper glass 11.

In this case, when an electrical resistance component is included in a material of a cooking container, the magnetic field may generate eddy current in the cooking container. The eddy current may heat the cooking container itself, and the heat may be conducted and transmitted to an internal side of the cooking container. Thus, the induction heating mode may proceed in a method of cooking contents in the cooking container.

Movement of the magnetic field generated in the working coil 12 by the ferrite 13 is shown in FIG. 2.

With reference to a circuit diagram in which the wireless power transmission apparatus 10 is operated in the induction heating mode, the wireless power transmission apparatus 10 may have a structure shown in FIG. 3.

In detail, FIG. 3 is a circuit diagram of a wireless power transmission apparatus in an electromagnetic induction heating mode when the wireless power transmission apparatus includes one inverter 140 and one working coil 12 (hereinafter, referred to as 150). The wireless power transmission apparatus 10 in the electromagnetic induction heating mode may include a rectifier 120, a direct current (DC) link capacitor 130, an inverter 140, the working coil 12 (150), and a resonance capacitor 160.

An external power source 110 may be an alternating current (AC) input power source. The external power source 110 may supply AC power to an electromagnetic induction heating cooking device. In more detail, the external power source 110 may supply AC voltage to the rectifier 120 of the electromagnetic induction heating cooking device.

The rectifier 120 may be an electrical circuit for converting AC into DC and may convert AC voltage supplied through the external power source 110 into DC voltage. In this case, opposite ends of DC output through the rectifier 120 may be referred to as DC links. A voltage measured at the DC opposite ends may be referred to as a DC link voltage. When a resonance curve is not changed, output power may be varied depending on a DC link voltage. The DC link capacitor 130 may function as a buffer between the external power source 110 and the inverter 140. In detail, the DC link capacitor 130 may maintain the DC link voltage converted through the rectifier 120 and may supply the voltage to the inverter 140.

The inverter 140 may switch a voltage applied to the working coil 12 (150) and may allow high-frequency current to flow in the working coil 12 (150). In general, the inverter 140 may drive a switching device including an insulated gate bipolar transistor (IGBT) and may allow high-frequency current to flow in the working coil 12 (150), and thus, a high-frequency magnetic field may be formed in the working coil 12 (150).

Current may or may not flow in the working coil 12 (150) according to whether the switching device is driven. When current flows in the working coil 12 (150), a magnetic field may be generated. As current flows in the working coil 12 (150), a magnetic field may be generated to heat a cooking container.

As such, in the electromagnetic induction heating mode, the wireless power transmission apparatus 10 may heat the cooking container using the working coil 12 (150) in electromagnetic induction.

When the wireless power transmission apparatus according to the present invention functions in a wireless power transmission mode, the working coil 12 (150) used in inductive heating may be used in wireless power transfer (WPT) in the same way.

Wireless power transfer (WPT) refers to technology of transmitting power without wire. A method that is currently and mainly used in wireless power transfer (WPT) may include a magnetic induction (MI) method or a magnetic resonance (MR) method. Each method will be described in detail below. The magnetic induction (MI) method uses a magnetic induction phenomenon between a primary coil and a secondary coil. In detail, when current is injected into a primary (transmission) coil, a magnetic field may be generated. Induced current may be generated in the secondary (reception) coil by the magnetic field generated in the primary coil. The induced current generated in the secondary coil charge a battery. The magnetic field generated using a magnetic induction method is weak, and thus, the primary coil and the secondary coil need to be positioned very adjacent to each other in order to charge the battery.

The magnetic resonance (MR) method is a method in which primary and secondary coils transmit and receive power using the same frequency. That is, when a magnetic field that oscillates at a resonance frequency is generated in the primary coil, the secondary coil may be designed at the same resonance frequency as the magnetic field generated in the primary coil and may receive energy. In this case, it may also be possible to charge the battery at a relatively long distance.

As such, a corresponding function may be selectively performed according to user mode selection using the same structure by using a coil used in wireless power transfer (WPT) as the working coil 12 used in the induction heating mode.

Referring back to FIG. 3, one side of the working coil 12 (150) may be connected to a node of a switching device of the inverter 140, and the other side of the working coil 12 (150) may be connected to the resonance capacitor 160. The switching device may be driven by a controller 190 and may be controlled according to a switching time output from the controller 190, and as the switching device is alternately operated, a high-frequency voltage may be applied to the working coil 12 (150). An on/off time of the switching device applied from the controller 190 is controlled to be gradually compensated for, and thus, a voltage applied to the working coil 12 (150) may be changed to a high voltage from a low voltage.

The controller 190 may control an overall operation of the wireless power transmission apparatus 10. That is, the controller 190 may control each component included in the wireless power transmission apparatus 10. The resonance capacitor 160 may be a component that functions as a buffer. The resonance capacitor 160 may adjust a saturation voltage increase rate while the switching device is turned off and may affect energy loss during a turn-off time. The resonance capacitor 160 may include a plurality of capacitors 160a and 160b that are connected in series to each other between the working coil 12 (150) and the DC opposite ends to which a voltage from the rectifier 120 is output. The resonance capacitor 160 may include a first resonance capacitor 160a and a second resonance capacitor 160b. In detail, one end of the first resonance capacitor 160a may be connected to one end to which a voltage from the rectifier 120 is output, and the other end may be connected to a node of the working coil 12 (150) and the second resonance capacitor 160b. Similarly, one end of the second resonance capacitor 160b may be connected to the other end to which a low voltage is output from the rectifier 120, and the other end may be connected to a node of the working coil 12 (150) and the first resonance capacitor 160a.

Capacitance of the first resonance capacitor 160a may be the same as capacitance of the second resonance capacitor 160b.

Depending on capacitance of the resonance capacitor 160, a resonance frequency of the wireless power transmission apparatus 10 may be determined.

In detail, the resonance frequency of the wireless power transmission apparatus 10 configured as the circuit diagram shown in FIG. 3 may be determined depending on inductance of the working coil 12 (150) and capacitance of the resonance capacitor 160. A resonance curve may be formed based on the resonance frequency determined depending on the inductance of the working coil 12 (150) and the capacitance of the resonance capacitor 160. The resonance curve may represent output power depending on a frequency.

A quality (Q) factor may be determined depending on an inductance value of the working coil 12(150) included in the multi-functional wireless power transmission device 10 and a capacitance value of the resonance capacitor 160. The resonance curve may be differently formed depending on the Q factor. A frequency at which maximum power is output may be referred to as a resonance frequency (f0), and the wireless power transmission apparatus may use a frequency of a right region based on the resonance frequency (f0) of the resonance curve. Thus, the wireless power transmission apparatus 10 may reduce a frequency to lower a firepower stage and may increase the frequency to increase the firepower stage. The wireless power transmission apparatus 10 may adjust such a frequency and may adjust output power. The wireless power transmission apparatus 10 may use a frequency corresponding to a range to a second frequency from a first frequency. That is, the wireless power transmission apparatus may change a current frequency to any one frequency included in the range to the second frequency from the first frequency and may adjust firepower. The first frequency as a minimum frequency and the second frequency as a maximum frequency that are to be controlled by the wireless power transmission apparatus 10 may be preset. For example, the first frequency may be 20 kHz and the second frequency may be 75 kHz.

As the first frequency is set as 20 kHz, the wireless power transmission apparatus 10 may prevent the case in which an audible frequency (about 16 Hz to 20 kHz) is used. Thus, noise of the wireless power transmission apparatus 10 may be reduced. The second frequency may be set to an IGBT maximum switching frequency. The IGBT maximum switching frequency may refer to a maximum frequency for driving in consideration of internal pressure, capacitance, and the like of the IGBT switching device. For example, the IGBT maximum switching frequency may be 75 kHz.

For this reason, a frequency that is generally used to heat a cooking took by induction heating in the wireless power transmission apparatus 10 may be included in about 20 kHz to 75 kHz.

A frequency used in wireless power transfer (WPT) may be different from a frequency used for induction heating the cooking container by the wireless power transmission apparatus 10. In particular, the frequency used in wireless power transfer (WPT) may be a frequency with a higher band than the used to heat a cooking container by the wireless power transmission apparatus.

Thus, the wireless power transmission apparatus according to the present invention may provide both a cooking tool heating function and a wireless power transfer (WPT) function through the same working coil 12 (150) by adjusting a resonance frequency.

FIG. 4 is an example of a circuit diagram of the case in which a wireless power transmission apparatus is operated in a wireless power transmission mode according to an embodiment of the present invention.

FIG. 4 shows an example of the wireless power transmission apparatus 10 that selectively provides a cooking container induction heating mode and a wireless power transmission mode according to an embodiment of the present invention.

The wireless power transmission apparatus 10 according to an embodiment of the present invention may include the rectifier 120, the DC link capacitor 130, the inverter 140, the working coil 12 (150), the resonance capacitors 160a and 160b, WPT capacitors 170a and 170b, and mode conversion switches 180a and 180b.

The same description as the description given with reference to FIG. 3 is omitted here.

The working coil 12 (150) may generate a magnetic field as current flows therein. The magnetic field generated in the working coil 12 (150) may heat the target object 1 of a secondary side as being transmitted through the cooking container of the secondary side.

The magnetic field generated by the working coil 12 (150) may transmit power to a small home appliance of the secondary side as being transmitted through the small home appliance of the secondary side.

The resonance capacitors 160a and 160b may be the same as in the description given with reference to FIG. 3. That is, the resonance capacitors 160a and 160b shown in FIG. 4 may be the same as the resonance capacitor included in the wireless power transmission apparatus 10 as described above with reference to FIG. 3.

As the wireless power transmission apparatus 10 is operated in a wireless power transmission mode or a cooking container induction heating mode, the resonance capacitors 160a and 160b may or may not be connected in parallel to the WPT capacitors 170a and 170b.

The WPT capacitors 170a and 170b may be connected in parallel to the resonance capacitors 160a and 160b. The WPT capacitors 170a and 170b may be a component for lowering a resonance frequency of the wireless power transfer (WPT) to operate an electromagnetic induction heating cooking device 100 in the wireless power transmission mode. In detail, when the wireless power transmission apparatus 10 is operated in the cooking container induction heating mode, the WPT capacitors 170a and 170b may not be connected to the resonance capacitors 160a and 160b. In contrast, when the wireless power transmission apparatus 10 is operated in the wireless power transmission mode, the WPT capacitors 170a and 170b may be connected in parallel to the resonance capacitors 160a and 160b. When the WPT capacitors 170a and 170b are connected in parallel to the resonance capacitors 160a and 160b, composite capacitance may increase. When the composite capacitance increases, the resonance frequency (f0) may be reduced according to Equation 1 below.

That is, when the electromagnetic induction heating cooking device 100 is operated in the wireless power transmission mode, the resonance frequency (f0) may be reduced. As such, the wireless power transmission apparatus 10 may reduce the resonance frequency (f0) and may wirelessly transmit power to a product of a secondary side using the original inverter 140 and working coil 12 (150).

The WPT capacitors 170a and 170b may include the first WPT capacitor 170a and the second WPT capacitor 170b. The first WPT capacitor 170a may be connected in parallel to the first resonance capacitor 160a, and the second WPT capacitor 170b may be connected in parallel to the second resonance capacitor 160b.

Capacitance of the first WPT capacitor 170a may be the same as capacitance of the second WPT capacitor 170b.

The mode conversion switches 180a and 180b may determine whether the WPT capacitors 170a and 170b and the resonance capacitors 160a and 160b are connected in parallel to each other. That is, the mode conversion switches 180a and 180b may perform control to connect or not connect the WPT capacitors 170a and 170b in parallel to the resonance capacitors 160a and 160b.

In detail, when the mode conversion switches 180a and 180b are turned on, a circuit may be shorted, and the WPT capacitors 170a and 170b and the resonance capacitors 160a and 160b may be connected in parallel to each other. Thus, as described above, the resonance frequency (f0) may be reduced.

In contrast, when the mode conversion switches 180a and 180b are turned off, the circuit may be open, and the WPT capacitors 170a and 170b may not be connected to the resonance capacitors 160a and 160b. Thus, the resonance frequency (f0) may not be changed.

The mode conversion switches 180a and 180b may include the first mode conversion switch 180a and the second mode conversion switch 180b, and the first mode conversion switch 180a and the second mode conversion switch 180b may be simultaneously operated. The first mode conversion switch 180a may determine whether the first WPT capacitor 170a and the first resonance capacitor 160a are connected in parallel to each other, and the second mode conversion switch 180b may determine whether the second WPT capacitor 170b and the second resonance capacitor 160b are connected in parallel to each other.

According to the present invention, as described above, the mode conversion switches 180a and 180b may be controlled depending on an operation mode, and may be operated in the wireless power transmission mode or the induction heating mode through the same working coil 12 (150).

That is, one mode of the two modes may be selectively operated through a user input unit according to user selection.

The wireless power transmission apparatus 10 may further include the controller 190 for controlling on and off of the conversion switches 180a and 180b depending on such mode selection, controlling on and off a switching device of the inverter 140, and controlling an overall operation of a driving module.

When the induction heating mode is selected using a user input unit, the controller 190 of the wireless power transmission apparatus 10 may be operated in the induction heating mode, and the conversion switches 180a and 180b may be turned off to perform induction heating.

When the wireless power transmission mode of the target object 1 is selected using the user input unit, the wireless power transmission apparatus 10 may be operated in the wireless power transmission mode, the conversion switches 180a and 180b may be turned on, and wireless power transfer (WPT) may be performed at a resonance frequency based on composite capacitance.

In this case, the wireless power transmission apparatus 10 needs to perform whether the target object 1 positioned on the upper glass 11 is capable of wirelessly transmitting power.

Even if a user selects the wireless power transmission mode through the user input unit, when the target object 1 positioned on the wireless power transmission apparatus is an electronic product that is not capable of performing wireless power transfer (WPT) or a small home appliance having no reception coil but not a small home appliance having a reception coil, the wireless power transmission apparatus 10 may differently perform the operation.

When the operation is performed based on only mode selection information received through the user input unit, overcurrent may flow in the target object 1 having no reception coil, or in the case of a foreign object, a waste of electricity may also be caused due to overcurrent and high heat may be accompanied, and thus, the apparatus may be damaged.

When the target object 1 is a small home appliance having the reception coil 15, an alignment state between the reception coil 15 and the working coil 12 may need to be determined.

When the reception coil 15 and the working coil 12 are not aligned with each other, that is, in the case of eccentricity, an operation frequency of wireless power transmission needs to be controlled to perform power transmission for which eccentricity is compensated.

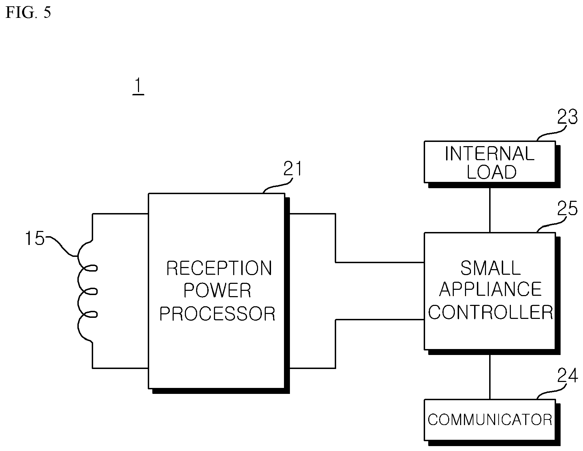

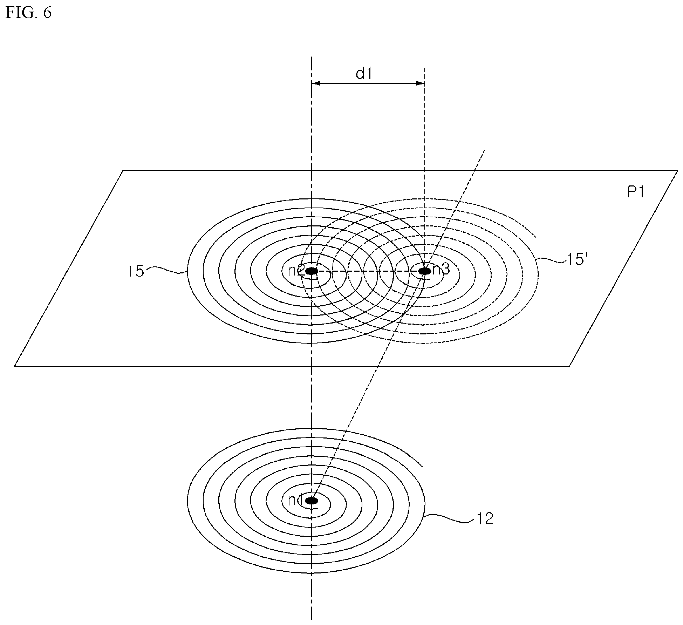

In this case, a configuration of a reception side, that is, a target object may be, for example, the same as in FIG. 5, and an alignment state between the reception coil and the working coil of the target object may be shown in FIG. 6.

FIG. 5 is a diagram showing a configuration of a target object at a reception side according to an embodiment of the present invention. FIG. 6 is a state diagram showing an alignment state between a reception coil and a working coil.

Referring to FIG. 5, the target object 1 according to an embodiment of the present invention, that is, a small home appliance having the reception coil 15 may include the reception coil 15, a reception power processor 21 connected to the reception coil 15 and configured to process received wireless power, a small appliance controller 25, an internal load 23, and a communicator 24.

In the case of the small home appliance having the reception coil 15 according to an embodiment of the present invention, the reception coil 15 may be disposed on a bottom surface or the like and may be formed to face the working coil 12 and to wirelessly receive power.

The small home appliance having the reception coil 15 may be a small home appliance including the internal load 23 as a functional block, such as a wireless oven toaster or a wireless blender, and may include the reception power processor 21 for wirelessly receiving power, converting corresponding power to a desired level, and providing the power to the internal load 23 with a desired function.

The reception power processor 21 may include a converter for rectifying current and voltage in the reception coil 15 and converting the rectified current and voltage to a desired level, but the present invention is not limited thereto.

The communicator 24 may wirelessly communicate with the wireless power transmission apparatus 10 for induction heating according to an embodiment of the present invention, may transmit information on a load voltage, target output of the small home appliance, or the like, and may also transmit information on whether the internal load 23 is driven.

The small home appliance having the reception coil 15 may include the small appliance controller 25 for controlling the reception power processor 21, the internal load 23, and the communicator 24, and the small appliance controller 25 may control each functional block according to a command from an external user, that is, a command through a user interface or the like, and may supply power required by the internal load 23 to drive the internal load 23.

Thus, it may be possible to wirelessly supply power and to perform a desired function, and thus, power may be supplied from the wireless power transmission apparatus 10 without power supply by wire, the internal load 23 may be driven, and a function of a toaster, a blender, or the like may be performed.

When the small home appliance having the reception coil 15 is positioned on the upper glass 11, alignment between the reception coil 15 and the working coil 12 may proceed.

Alignment between the reception coil 15 and the working coil 12 may be defined based on whether the centers of the two coils 12 and 15 are positioned on the same axis.

That is, as schematically shown in FIG. 6, assuming that the central points n1 and n2 of the respective coils, that is, the central point n2 of the reception coil 15 and the central point n1 of the working coil 12 are positioned on the single plane, an eccentricity amount d1 may be defined as a straight distance between the two central points.

According to an embodiment of the present invention, for wireless power transfer of a small home appliance having the reception coil 15, for example, a blender or an oven toaster, the reception coil 15 needs to be aligned with the working coil 12 at a short distance that satisfies a predetermined distance.

Alignment may be defined as constancy, that is, a state in which the two central points n1 and n2 are homocentric on the single plane assuming that the two coils 12 and 15 are positioned on the single plane p1, that is, a state in which the central point n2 of the reception coil 15 and the central point n1 of the working coil 12 are homocentric on an axis perpendicular to an imaginary single plane p1.

Eccentricity corresponds to the case in which central points n1 and n3 of the two coils 12 and 15 are not homocentric on the axis perpendicular to the imaginary single plane p1, and as shown in FIG. 6, a distance d1 between the two central points n1 and n3 on the imaginary single plane p1 may be defined as an eccentricity degree.

Thus, the eccentricity degree may be defined as the straight distance d1 on the imaginary single plane and may not be a diagonal distance on difference planes.

In this case, in order to smoothly perform wireless power transfer between the two coils 12 and 15, the eccentricity degree needs to be a predetermined range or less, and as the eccentricity degree is increased, transmission efficiency of wireless power transfer may be lowered, and to detect this, an error may occur in a detection signal.

Thus, when such an error occurs, the accuracy of detecting a foreign object or the like may be remarkably degraded, thereby degrading reliability in an operation.

Thus, the present invention proposes a method of determining an eccentricity degree, compensating for this, detecting whether a foreign object is present, and wirelessly transmitting power during wireless power transfer.

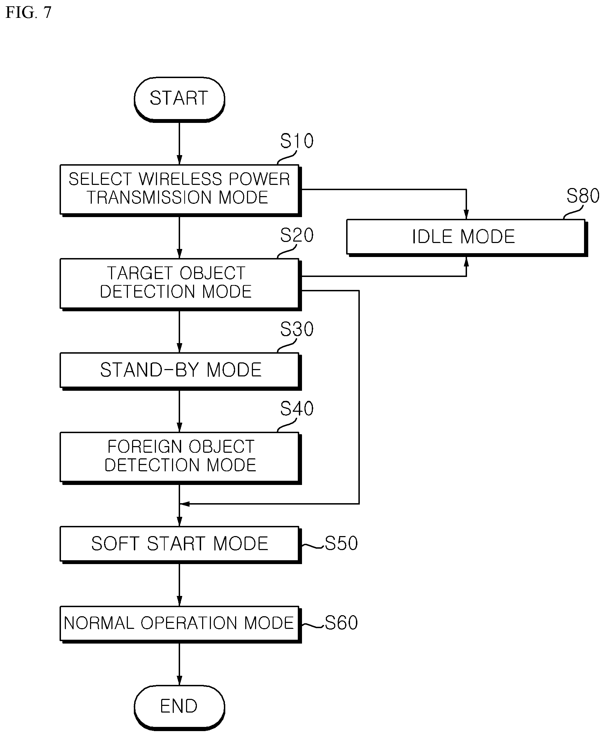

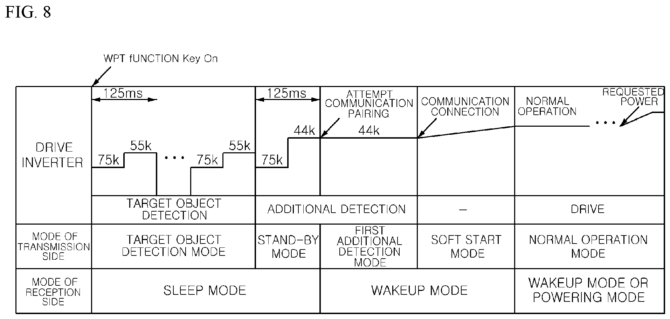

Hereinafter, the whole operation of a wireless power transmission apparatus for induction heating according to an embodiment of the present invention will be described with reference to FIGs. 7 and 8.

FIG. 7 is a schematic flowchart of a mode of a wireless power transmission apparatus for induction heating according to an embodiment of the present invention. FIG. 8 is a diagram showing a structure of a transmission apparatus and a reception apparatus with respect to the flowchart of FIG. 7.

Referring to FIGs. 7 and 8, when the controller 190 receives selection information corresponding to selection of an icon or a button of a wireless power transmission mode by selecting the icon or the button from a user input unit, the wireless power transmission apparatus for induction heating according to the present invention may be converted into the wireless power transmission mode and may perform an operation.

The wireless power transmission apparatus 10 for induction heating may have a preparation period through a plurality of operations to a normal operation mode S60, that is, an operation of wirelessly emitting power towards the reception target object 1.

The wireless power transmission apparatus 10 for induction heating may perform detection for identifying the target object 1 positioned on the upper glass 11 in the preparation period prior to the normal operation mode.

That is, the target object 1 may be identified, for example, whether the target object 1 is a small home appliance having a reception coil, is a small home appliance that is directly heated without a reception coil and has only a pick up coil, is a general heating container, is a foreign object, or is in a no-load state in which there is nothing.

In detail, when receiving mode selection information (S10), the wireless power transmission apparatus 10 may enter a target object detection mode S20 in terms of a transmission side.

The wireless power transmission apparatus 10 defined as the transmission side may execute a foreign object detection mode S40 and a soft start mode S50 through a target object detection mode S20 and a stand-by mode S30.

In the soft start mode S50, prior to entry into the normal operation mode S60, detection of all the target objects 1 may be terminated and corresponding power may be wirelessly transmitted (S70).

The target object detection mode S20 may be simultaneously executed when a user pushes a wireless power transmission mode icon or button of a user input unit, and the controller 190 may oscillate frequencies for determining whether the target object 1 is positioned on the upper glass 11 and predicting an alignment state.

In this case, a switching device of the inverter 140 may be alternately turned on and off to allow current to flow according to the oscillation frequency. Whether the target object 1 identified in the target object detection mode S20 is a general heating container may be determined whether the target device 1 is a heating container may be determined while switching to a first operation frequency from a start frequency.

In the target object detection mode S20, whether the target object 1 is present and whether the target object 1 has a coil may be determined, and when the coil is present, whether the reception coil 15 and the working coil 12 of the target object 1 are aligned with each other, that is, whether the coils are positioned in constancy or eccentricity may be additionally determined, but the present invention is not limited thereto.

In the target object detection mode S20, the wireless power transmission apparatus 10 may attempt wireless communication with the target object 1, but in reality, reception through wireless communication may be started by communication pairing when power of a small home appliance that is the target object 1 is supplied in the foreign object detection mode.

An idle mode may be defined as a start mode in which the controller 190 is activated by supplying power to a driving module including the controller 190 of the wireless power transmission apparatus 10 for induction heating when a user pushes and turns on a power button through a user input unit.

In the idle mode, wired communication between the user input unit and the driving module is performed, but the controller 190 may not substantially begin to be driven.

The stand-by mode S30 may be an operation after the target object detection mode S20, and may be defined as a frequency change period in which the inverter 140 is driven at a second operation frequency in order to determine a foreign object when the target object 1 is present in a region for wireless power transfer.

In this case, in the stand-by mode S30, frequency sweep may occur from an initial operation frequency to a second operation frequency, and when the second operation frequency is reached, a current mode may substantially enter the foreign object detection mode S40.

In this case, the second operation frequency may not oscillate from the beginning because oscillation needs to be sequentially induced since driving noise is generated when the apparatus is driven at the second operation frequency, that is, a lower frequency than the initial operation frequency in a state in which a voltage of a DC link is charged.

Then, the foreign object detection mode S40 may be defined as a period in which load voltage information of the target object is received and whether a foreign object is present in a state in which the apparatus is driven at the second operation frequency and communication pairing with a reception side, that is, the target object 1 is performed.

In this case, when the foreign object is determined to be present, the apparatus may enter the idle mode again and information indicating that the foreign object is present may be signaled to a user, and when there is no foreign object, the apparatus may enter the soft start mode S50.

That is, a state that is activated by injecting power into the reception side, that is, the target object 1 due to induced current from the foreign object detection mode S40 may be defined as a wakeup mode, and in this case, wireless communication is paired between the reception side and the transmission side and communication may begin therebetween.

The soft start mode S50 may be defined as a period in which power of a level requested by the target object 1 is changed to a frequency corresponding to corresponding power for an operation in the wireless power transmission apparatus 10.

When the power of the level requested by the target object 1 is approximately reached in the soft start mode S50, a current mode may enter the normal operation mode S60.

In the soft start mode S50, an additional detection mode may be executed.

The additional detection mode may be defined as a period in which additional detection is performed for recheck prior to power transfer of a small home appliance.

That is, in the additional detection mode, a mode that is actually selected by a user may be rechecked, and whether there is an error of judgment between no load and a small home appliance may be rechecked.

The normal operation mode S60 may be defined as a period in which change in requested output is monitored and whether there is a difference between actual output and the requested output is determined with a constant level at power of the level requested by the target object 1.

In this case, when there is the difference between the actual output and the requested output, if the actual output is lower than the requested output, a power up mode may proceed to lower an operation frequency and to increase output, and if the actual output is higher than the requested output, a power down mode may proceed to increase the operation frequency and to lower the output.

At a side of the target object 1, according to user operation selection and operation time of the target object 1 or according to request for low power or high power, the controller 190 may perform an operation using requested output based on the request.

As such, according to an embodiment of the present invention, as the foreign object detection mode S40 is executed, a parameter for other situations such as eccentricity may be removed and then a foreign object may be detected (S40).

That is, in the foreign object detection mode S40, when a load voltage may be received from the target object 1 and a foreign object is present, wireless power transmission efficiency may be degraded, and thus, reduction in a load voltage may be detected to determine whether a foreign object is present.

Under a condition in which an input voltage of a wireless power transmission apparatus is changed, or when eccentricity occurs between a target object and a working coil, reduction in the load voltage may also occur.

Thus, the present invention provides a method of compensating for and removing parameters related to the case related to the case in which an input voltage is changed or eccentricity occurs, and determining whether a foreign object is present.

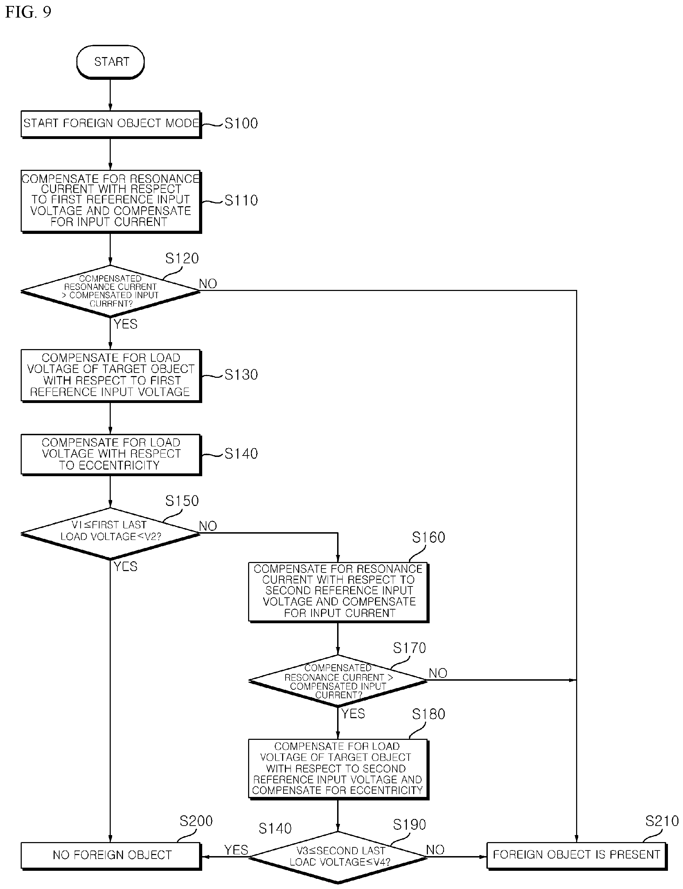

Hereinafter, a method of detecting a foreign object in a foreign detection mode according to the present invention will be described in detail with reference to FIGs. 9 to 11C.

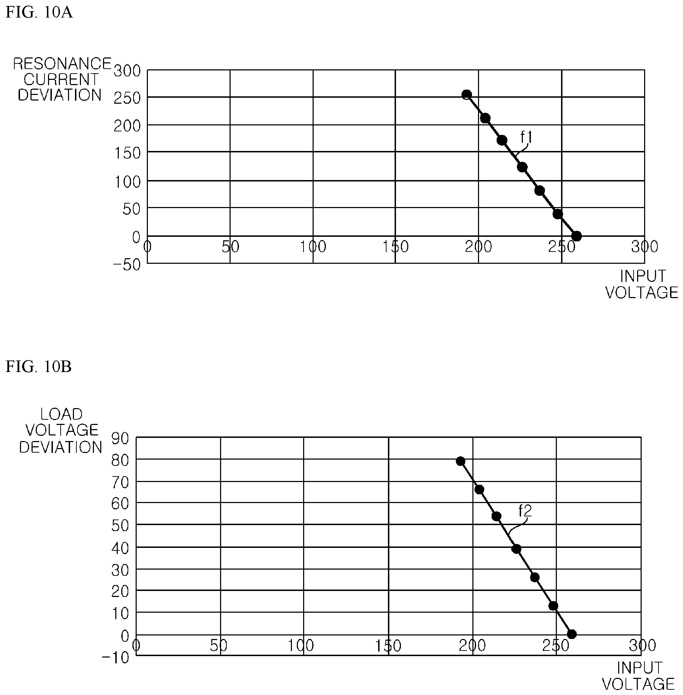

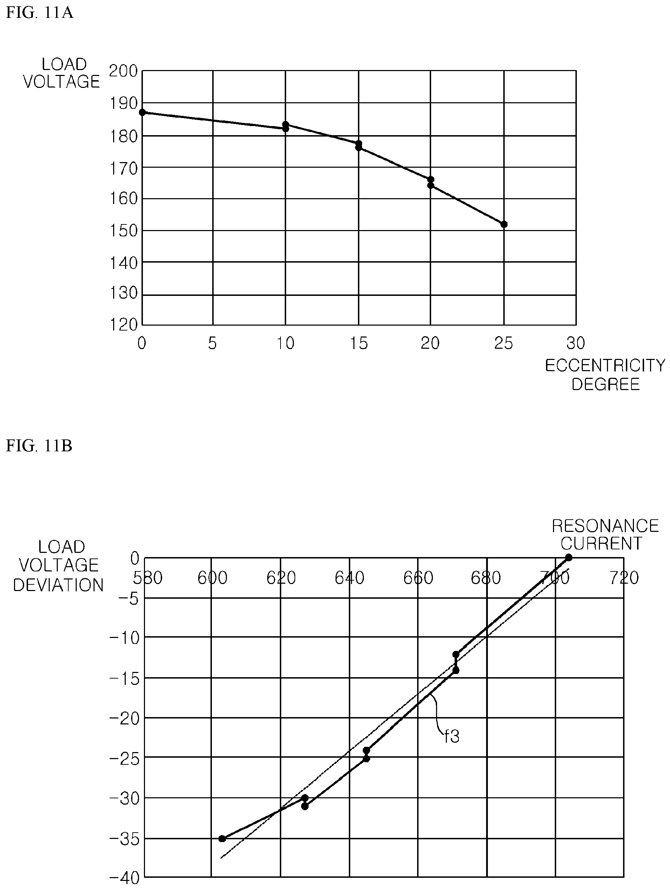

FIG. 9 is a flowchart showing an operation of determining eccentricity and a foreign object during power transfer. FIGs. 10A and 10B are graphs showing a compensating method depending on an input voltage. FIGs. 11A to 11C are graphs showing an example of eccentricity compensation.

Referring to FIG. 9, when a stand-by mode is terminated and a foreign object detection mode begins, wireless power transfer may begin while driving the inverter 140 at the second operation frequency and performing communication with the target object 1 (S100).

In this case, wirelessly transmitted power may refer to a small amount of power in a preparation operation but not power that reaches desired output.

Thus, in the inverter 140 of the wireless power transmission apparatus 10 for induction heating, a switching device may be turned on or off by a second operation frequency to allow input current to flow, and thus, a standby voltage may be set in the working coil 12 to allow resonance current to flow.

In this case, the controller 190 may receive information on a load voltage through wireless communication from the communicator 24 of a small home appliance that if the target object 1 (S110).

The controller 190 may read a corresponding load voltage and may compensate for a corresponding load voltage value depending on a current input voltage.

That is, when the current input voltage is not a first reference input voltage, the controller 190 may compensate for the amplitude of the received load voltage by the first reference input voltage and may calculate the compensated load voltage.

Such switch of load voltage may be performed through the following table.

[Table 1]

| | Prior to in put voltage compensation | | | | | | After compensation | |
|---|---|---|---|---|---|---|---|---|
| Input voltage | Input current (44kHz) | Resonance current (44kHz) | Load voltage | Input current deviation | Resonance current deviation | Load Voltage deviation | Load voltage compensation | Load voltage actual value |
| 193 | 372 | 452 | 71 | 34 | 253 | 79 | 150 | 152 |
| 193 | 372 | 452 | 71 | 34 | 253 | 79 | 150 | |
| 193 | 372 | 450 | 71 | 34 | 255 | 79 | 150 | |
| 193 | 372 | 452 | 71 | 34 | 253 | 79 | 150 | |
| 204 | 377 | 493 | 84 | 29 | 212 | 66 | 150 | 151 |
| 204 | 376 | 493 | 84 | 30 | 212 | 66 | 150 | |
| 204 | 376 | 493 | 84 | 30 | 212 | 66 | 150 | |
| 204 | 377 | 493 | 84 | 29 | 212 | 66 | 150 | |
| 214 | 383 | 533 | 96 | 23 | 172 | 54 | 150 | 150 |
| 214 | 383 | 533 | 96 | 23 | 172 | 54 | 150 | |
| 214 | 382 | 534 | 96 | 24 | 171 | 54 | 150 | |
| 214 | 383 | 534 | 96 | 23 | 171 | 54 | 150 | |
| 226 | 392 | 581 | 111 | 14 | 124 | 39 | 150 | 151 |
| 226 | 392 | 581 | 111 | 14 | 124 | 39 | 150 | |
| 226 | 391 | 582 | 111 | 15 | 123 | 39 | 150 | |
| 226 | 390 | 582 | 111 | 12 | 123 | 39 | 150 | |
| 237 | 395 | 624 | 124 | 11 | 81 | 26 | 150 | 151 |
| 237 | 395 | 624 | 124 | 11 | 81 | 26 | 150 | |
| 237 | 395 | 624 | 124 | 11 | 81 | 26 | 150 | |
| 237 | 395 | 623 | 124 | 11 | 82 | 26 | 150 | |
| 248 | 401 | 666 | 137 | 5 | 39 | 13 | 150 | 151 |
| 248 | 401 | 666 | 137 | 5 | 39 | 13 | 150 | |
| 248 | 401 | 666 | 137 | 5 | 39 | 13 | 150 | |
| 248 | 401 | 666 | 137 | 5 | 39 | 13 | 150 | |

EP 3 872 959 A1

(continued)

| | Prior to in put voltage compensation | | | | | | After compensation | | |
|---|---|---|---|---|---|---|---|---|---|
| Input voltage | Input current (44kHz) | Resonance current (44kHz) | Load voltage | Input current deviation | Resonance current deviation | Load Voltage deviation | Load voltage compensation | Load voltage actual value |
| 259 | 406 | 705 | 150 | 0 | 0 | 0 | 150 | 151 |
| 259 | 407 | 708 | 150 | -1 | -3 | 0 | 150 | |
| 259 | 406 | 706 | 150 | 0 | -1 | 0 | 150 | |
| 259 | 406 | 706 | 150 | 0 | -1 | 0 | 150 | |

In detail, as shown in Table 1 above, the controller 190 may have reference data of a value of input current and a value of resonance current at a second operation frequency and a value of a load voltage of the target object 1 depending on a value of an input voltage, that is, a value of an input voltage that is commercially available power provided to the wireless power transmission apparatus 10 from a wall power source.

The type and size of a small home appliance that is the target object 1 that wirelessly receives power through the corresponding wireless power transmission apparatus 10 are limited, and the amplitude of a load voltage that is already set in the reception coil 15 when the reception coil 15 itself is deigned may be stored and retained as experimental data depending on the amplitude of an operation frequency.

Thus, receiving a load voltage of a specific input voltage with respect to a second operation frequency in an actual operation, the controller 190 may compensate for the load voltage by a value of a first reference input voltage.

In this case, the first reference input voltage may be 259 V, but the present invention is not limited thereto.

Table 1 is based on the case in which the first operation frequency is 44 kHz, but the present invention is not limited thereto.

The controller 190 may calculate graphs shown in FIGs. 10A and 10B based on a value of input current supplied to the inverter 140 when the inverter 140 is driven at a second operation frequency with respect to an input voltage with various amplitudes, and information on a value of resonance current flowing in the working coil 12 and a load voltage applied to the reception coil 15 of the target object 1, which is a reception end for wirelessly receiving power.

In this case, the controller 190 may calculate resonance current and input current when the first reference input voltage is 259 V, resonance current at a different input voltage from a load voltage, and a deviation of input current and a load voltage at a second operation frequency as shown in Table 1 above.

In this case, the resonance current and the input current may be a predetermined integrated value of values detected every count, but the present invention is not limited thereto.

Such a calculation result may be shown in a right side of Table 1.

Such deviation information may also be retained in the controller 190.

The controller 190 may calculate graphs shown in FIGs. 10A and 10B with respect to resonance current, input current, and a load voltage.

In each graph, the x axis indicates an input voltage and the y axis indicates a deviation value of each parameter.

For example, FIG. 10A relates to resonance current and is a graph showing a resonance current deviation (a difference between resonance current at the first reference input voltage and resonance current at a corresponding input voltage) with respect to an input voltage.

Referring to FIG. 10A, the corresponding graph may be derived as a first order function f1, and thus, it may be possible to calculate an inclination and a y intercept.

FIG. 10C relates to a load voltage and is a graph showing a load voltage deviation (a difference between a load voltage at a first reference input voltage and a load voltage at a corresponding input voltage) with respect to an input voltage.

Referring to FIG. 10C, the corresponding graph may also be derived as a first order function f2, and thus, it may be possible to calculate an inclination and a y intercept.

It may also be possible to calculate a function of input current as shown in FIG. 10A or 10B.

Thus, when a current input voltage value is known from each function and load voltage information is read based on information from the target object 1, this may be applied to the function based on each graph to calculate a deviation value.

Thus, a corresponding deviation value may be added to a current load voltage value, and thus, a load voltage value recalculated based on a first reference input voltage but not the current input voltage may be calculated as a compensated load voltage value.

In the same method, the controller 190 may calculate corresponding resonance current and an input current value as compensated resonance current and compensated input current that are recalculated when the first reference input voltage but not values with respect to the current input voltage.

In this case, first, the controller 190 may a compensated value of resonance current and input current with respect to the first reference input voltage (S120) and may compensate for a load voltage when the compensated value of the resonance current is greater than the compensated input current (S130).

In the case of compensation, when compensated resonance current is not greater than compensated input current, a foreign object may be determined to be present, and an operation may be terminated.

When the compensated value of the resonance current is greater than the input current, the controller 190 may compensate for a load voltage of the target object 1 with respect to the first reference input voltage and may calculate the compensated load voltage value (S140).

In this case, the controller 190 may store functions of the respective graphs with respect to parameters, that is, resonance current, input current, and load voltage, and may perform calculation on a value obtained digitizing and detecting an inclination and y intercept of each function.

In this case, a compensation equation of each parameter may be modified as follows.

First, in FIG. 10A, a graph of an analog value with respect to resonance current may be represented according to the following function f1.

[Equation 1]

$$y = -0.8851x + 1003.1$$

As described above, x is an input voltage, and y is a deviation in an integrated value of resonance current (a difference of an integrated value of resonance current in a current input voltage with respect to a first reference input voltage). In this case, when a value of resonance current is large, it may be possible to replace a value of resonance current in a specific count but not an integrated value of a plurality of counts.

Equation 1 above may be digitized to Equation 2 below and may be calculated by the controller 190.

[Equation 2]

Compensated resonance current = current resonance current integrated value + second compensated value – first compensated value,

First compensated value=3*current input voltage + 600 * current input voltage/$2^{10}$,

Second compensated value = k

In this case, the current resonance current integrated value may be an integrated value of resonance current with respect to a predetermined count, and the current input voltage may be an RMS voltage value of current wall power, that is, commercially available power.

In this case, the second compensated value may be varied according to a function value, but may be set to 935 with respect to Equation 1 above with respect to a current graph.

Similarly, it may be possible to convert a value of input current.

That is, it may be calculate an analog function using data of an input current integrated value, and calculation of digitizing a corresponding analog function value may be performed.

In this case, calculation for digitization may be performed according to Equation 3 below.

[Equation 3]

Compensated input current=current input current integrated value + second compensated value –first compensated value,

First compensated value=543 * current input voltage/$2^{10}$,

Second compensated value= m

In this case, m may be determined depending on a function value but may be 137 with respect to Table 1 above.

A value of a load voltage may also be calculated in a similar way.

That is, a function calculated based on FIG. 10B may satisfy Equation 4 below.

[Equation 4]

$$y = -1.2007x + 310.76$$

In this case, as described above, x is an input voltage, and y is a deviation in a load voltage value (a difference of a load voltage between a load voltage in a first reference input voltage and a load voltage in a current input voltage).

Equation 4 above may be digitized to Equation 5 below and may be calculated by the controller 190.

[Equation 5]

Compensated load voltage = current load voltage + second compensated value − first compensated value,

First compensated value = current input voltage + 300 * current input voltage/$2^{10}$,

Second compensated value= n

In this case, the second compensated value may be varied depending on a function value but may be set to 332 with respect to Equation 4 above with respect to a current graph.

As such, the received value may be digitized and may be inserted into each function to acquire a deviation in parameters, and the deviation may be added to a current data value to calculate a compensated load voltage with respect to the first input reference voltage.

Thus, even if the input voltage is not the first input reference value, the controller 190 may recalculate the load voltage and may perform the following calculation in the case of the first input reference voltage.

Whether a foreign object is present may be determined with respect to the load voltage that is recalculated and compensated for, and thus, an accurate voltage variation may due to a foreign object be detected without consideration of transition of the load voltage with respect to a variation in the input voltage.

Then, the controller 190 may compensate for reduction in a load voltage due to eccentricity between the working coil 12 and the reception coil 15 of the target object 1 (S150).

That is, voltage reduction due to eccentricity that occurs between the two coils 12 and 15 may be compensated for, and thus, a factor for voltage reduction may be limited only to a foreign object, and whether a foreign object is present may be accurately determined according to the compensation result.

Compensation in the load voltage due to eccentricity may be calculated according to Table 2 below.

[Table 2]

| | Prior to eccentricity compensation | | | |
|---|---|---|---|---|
| Eccentricity degree | Input current | Resonance current | Load voltage | Load voltage deviation |
| 0 | 384 | 603 | 187 | -35 |
| 0 | 385 | 603 | 187 | -35 |
| 0 | 382 | 603 | 187 | -35 |
| 0 | 382 | 603 | 187 | -35 |
| 10 | 386 | 627 | 182 | -30 |
| 10 | 387 | 627 | 182 | -30 |
| 10 | 387 | 627 | 182 | -30 |
| 10 | 387 | 627 | 183 | -31 |
| 15 | 392 | 645 | 177 | -25 |
| 15 | 392 | 645 | 177 | -25 |
| 15 | 392 | 645 | 176 | -24 |
| 15 | 392 | 645 | 176 | -24 |
| 20 | 401 | 671 | 166 | -14 |
| 20 | 401 | 671 | 166 | -14 |
| 20 | 399 | 671 | 164 | -12 |
| 20 | 399 | 671 | 164 | -12 |
| 25 | 407 | 704 | 152 | 0 |
| 25 | 407 | 704 | 152 | 0 |

(continued)

| | Prior to eccentricity compensation | | | |
| --- | --- | --- | --- | --- |
| Eccentricity degree | Input current | Resonance current | Load voltage | Load voltage deviation |
| 25 | 406 | 704 | 152 | 0 |
| 25 | 407 | 704 | 152 | 0 |

Referring to Table 2 above, the controller 190 may retain data about input current, resonance current, and a load voltage of an eccentricity degree at a second operation frequency in the case of a first reference input voltage.

That is, the data of Table 2 above may be a value of each parameter calculated via an experiment or a simulation, and the controller 190 may store and retain data about an eccentricity degree of each parameter with respect to a second reference input voltage to be described later as well as the first reference input voltage.

The controller 190 may calculate a deviation value of a first eccentricity degree with respect to data of each parameter and may store the calculated deviation value with Table 2 above.

In this case, the first eccentricity degree may be set to 25 mm that is the maximum eccentricity degree but the pre sent invention is not limited thereto.

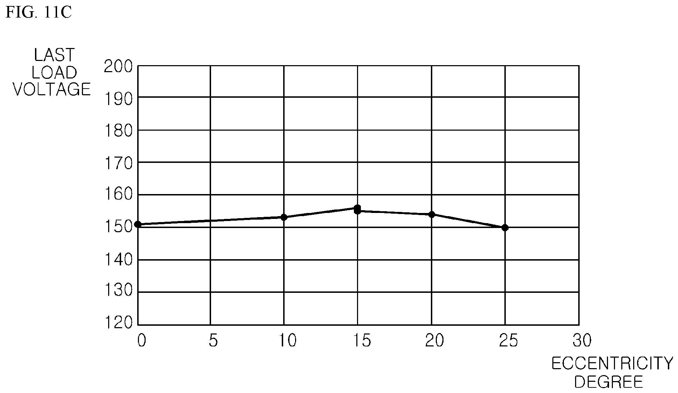

An input current deviation, a resonance current deviation, and a load current deviation may each be calculated with respect to the first eccentricity degree, and a graph of a deviation value of each parameter and an eccentricity degree may be obtained as shown in FIGs. 11A and 11C.

That is, FIG. 11A is a graph showing a load voltage with respect to various eccentricity degrees prior to eccentricity compensation.

With respect to such values, as shown in FIG. 11B, when a graph is derived by deriving a deviation with respect to the first eccentricity degree and then calculating the deviation value as the y and calculating the compensated resonance current (a compensated value with respect to the first reference input voltage) as the x axis, a function f3 of a corresponding load voltage deviation may satisfy Equation 6 below.

$$[Equation\ 6]$$
$$y = 0.3579x - 253.17$$

That is, when Equation 6 is applied to assume that a load voltage formed by compensating for an input voltage has the first eccentricity degree, a load voltage value obtained by compensating for a deviation may have the same/similar level value with respect to all eccentricity degrees as shown in FIG. 11C.

In this case, as described above, a function value with respect to a load voltage may have an analog value, and thus, the function value may be digitized and may be calculated by the controller 190 according to Equation 7 below.

$$[Equation\ 7]$$

Deviation compensated load voltage = input voltage compensated load voltage + first compensated value − second compensated value,

First compensated value = $367 *$ resonance current integrated value$/2^{10}$,

Second compensated value = a

In this case, the second compensated value may be varied depending on a function value but may be set to 253 with respect to Equation 7 above for the current graph.

A deviation may be obtained by digitizing the received integrated value of the resonance current and inserting the integrated value into an eccentricity compensation function f3 and may be added to a current data value, and thus, a first last load voltage may be calculated with respect to compensation and deviation with respect to the first input reference voltage.

The controller 190 may determine whether a foreign object is present based on the calculated first last load voltage (S160).

That is, when the first last load voltage value satisfies a first value V1 or greater and satisfies a second value V2 or less, it may be determined that there is no foreign object (S200) and a current mode may enter a soft start mode that is a next operation.

When the first last load voltage does not satisfy a value between the first value V1 and the second value V2, the controller 190 may recalculate compensation of a load voltage with respect to a second reference input voltage (S170).

That is, the controller 190 may also store data shown in Table 1 above with respect to the second reference input voltage and may compensate for an integrated value of corresponding input current and an integrated value of resonance current with respect to the second reference input voltage (S160).

In this case, the second reference input voltage may satisfy 220 V that is Korean commercially available power.

Thus, a deviation of each parameter in the case of the second reference input voltage may be calculated, and a function between the deviation for each parameter and the input voltage may be derived.

When generating a function of each parameter, the controller 190 may calculate the integrated value of resonance current and the integrated value of input current that are compensated for by digitizing such the equation.

In this case, the integrated value of input current that is digitized and compensated may correspond to Equation 8 below, and the compensated integrated value of the resonance current may correspond to Equation 9 below, and each coefficient may be changed according to a function of a parameter.

[Equation 8]

Compensated integrated value of input current = integrated value of current input current + second compensated value – first compensated value,

First compensated value =556 * current input voltage/$2^{10}$,

Second compensated value=b

In this case, b may be determined depending on a function value, but may be 80 according to the present embodiment.

[Equation 9]

Compensated resonance current integrated value=current resonance current integrated value + second compensated value – first compensated value,

First compensated value = 3*current input voltage + 429 * current input voltage/$2^{10}$,

Second compensated value= c

In this case, the current integrated value of the current resonance may be an integrated value of a detection value of resonance current with respect to a predetermined count, and the current input voltage may be an RMS voltage value of current wall power, that is, commercially available power.

In this case, the second compensated value may be varied depending on a function value, but may be 771 according to the present embodiment.

As such, when the integrate value of the resonance current obtained by compensating for the current input voltage value and the integrated value of input current are calculated with respect to the second reference input voltage, the corresponding integrated value of input current and the integrated value of resonance current may be compared with each other (S170).

When the compensated integrated value of resonance current is smaller than the integrated value of input current, the controller 190 may determine whether a foreign object is present.

In this case, when the compensated integrated value of resonance current is greater than the integrated value of input current, the controller 190 may determine that wireless power transmission is smoothly performed, may compensate for a load voltage with respect to the second reference input voltage, and may compensate for eccentricity in the corresponding value to calculate a second last load voltage (S180).

When such compensation of an input voltage and eccentricity based on the first reference input voltage with respect to the load voltage includes data shown in the above Tables 1 and 2 with respect to the second reference input voltage, the compensated value may be derived according to a function calculated based on corresponding data.

In this case, the corresponding function may be digitized and calculated according to Equations 10 and 11 below.

[Equation 10]

Compensated load voltage = current load voltage + second compensated value – first compensated value,

First compensated value = current input voltage + 322 * current input voltage/$2^{10}$,

Second compensated value= d

In this case, the second compensated value may be varied depending on a function value but may be set to 297 according to the present embodiment.

As such, the received value may be digitized and may be inserted into each function to acquire a deviation, and the deviation may be added to a current data value to calculate a compensated load voltage with respect to the second input reference voltage.

Then, the deviation may be compensated for by applying the compensated load voltage with respect to the second input reference voltage to Equation 11 below.

[Equation 11]

Deviation compensated load voltage = input voltage compensated load voltage + first compensated value – second compensated value,

First compensated value = 330 * resonance current integrated value/$2^{10}$,

Second compensated value= e

In this case, the second compensated value may be varied depending on a function value but may be set to 158 according to the present embodiment.

As such, when the received value is digitized and a load voltage deviation for compensating for eccentricity is added to the compensated load voltage with respect to the second reference input voltage, the compensated second last load voltage may be calculated with respect to the compensation and deviation for the second input reference voltage.

The controller 190 may determine whether a foreign object is present based on the calculated second last load voltage (S190).

That is, when the second last load voltage value satisfies a third value V3 or greater and satisfies a fourth value V4 or less, it may be determined that a foreign object is not present and a current mode may enter a soft start mode that is a next operation.

When the second last load voltage does not satisfy a value between the third value V3 and the fourth value V4, the controller 190 may lastly determine that a foreign object is present.

In this case, the first value V1 and the second value V2 that are a threshold value of the first last load voltage may be the same as the third value V3 and the fourth value V4, respectively, but may be different from each other in such a way that the values indicate different ranges. That is, only some of the threshold values may be different, and for example, the first to fourth V1 to V4 may be 149, 200, 138, and 200, respectively.

As such, when the input voltage with respect to the first reference input voltage may be compensated for, and whether a foreign object is present may be primarily determined, if the foreign object is determined to be present, the same calculation may be performed on the second reference input voltage again, and if the foreign object is determined to be present with respect to the second reference input voltage, the foreign object may be lastly determined to be present.

When determining that a foreign object is present, the controller 190 may stop transmitting power, that is, may stop driving the inverter 140, may provide an alarm to a user, and may guide removal of the foreign object (S200).

As such, in order to determine reduction in a load voltage due to a foreign object, whether a foreign object is present may be obviously determined by performing compensation for removing all other factors of voltage reduction and performing calculating a plurality of numbers of times to ensure reliability in determination.

Thus, whether a foreign object is present may be obviously determined, and when the foreign object is present, an operation may be stopped and the foreign object may be removed via a user alarm, and thus, wireless power transfer may be safely performed.

Through the above solution, the multi-functional wireless power transmission device using one working coil may determine whether eccentricity occurs in a target object, may compensate for this, and may perform wireless power transfer (WPT) in the wireless power transmission mode while selectively driving the wireless power transmission mode or the induction heating mode.

As such, the present invention may provide a wireless power transmission apparatus for providing an alarm to a user during wireless power transfer when a wireless power transmission mode is selected, if a target object is a small home appliance having a reception coil and excessive eccentricity occurs between the corresponding reception coil and a working coil of a transmission side. In this case, whether a foreign object is present as well as whether eccentricity occurs may be determined, and thus, a user alarm may also be provided.

In addition, a difference in an input voltage and an eccentricity degree may be compensated for and then a foreign object may be detected, and thus, the foreign object may be obviously detected irrespective of the amplitude of the input voltage and the eccentricity degree, thereby ensuring reliability and operation stability.

**Claims**

1. A wireless power transmission apparatus (10) for induction heating and for wirelessly transmitting power to a target object (1), comprising:

   a working coil (12, 150) configured to induction-heat the target object and to wirelessly transmit power to the target object (1) depending on a selected mode;
   an inverter (140) configured to be operated based on an operation frequency for providing power to the working coil (12, 150); and
   a controller (190) configured to receive information on a load voltage from the target object (1) during wireless power transfer, to compensate for the load voltage, and to determine whether a foreign object is present on the working coil (12, 150), upon selection of a wireless power transmission mode.

2. The wireless power transmission apparatus (10) of claim 1, wherein the controller (190) is configured to operate in a normal mode (S60) for performing the wireless power transfer to the target object (1), and to operate in a preparation period prior to the normal mode (S60), and wherein the controller (190) is configured to determine whether the foreign object is present during the preparation period.

3. The wireless power transmission apparatus (10) of claim 1 or 2, wherein the controller (190) is configured to receive information on the load voltage from the target object (1) while driving the inverter (140) at a predetermined operation frequency, to compensate for the load voltage based on a current input voltage, and to determine whether the foreign object is present based on the compensated load voltage.

4. The wireless power transmission apparatus (10) according to any one of the preceding claims, wherein the controller (190) is configured to calculate the compensated load voltage by changing a current input voltage to a first reference input voltage, and removing the variation in the load voltage with respect to the current input voltage.

5. The wireless power transmission apparatus (10) of claim 3 or 4, wherein the controller (190) is configured to calculate a final load voltage by compensating for an eccentricity degree between the working coil (12, 150) and a reception coil (15) of the target object (1) with respect to the compensated load voltage.

6. The wireless power transmission apparatus of claim 4 or 5, wherein the controller (190) is configured to calculate a last load voltage based on the first reference input voltage and to determine whether the foreign object is present based on the final load voltage.

7. The wireless power transmission apparatus of claim 6, wherein, when determining whether the foreign object is present based on the final load voltage with respect to the first reference input voltage, the controller (190) is configured to additionally calculate a final load voltage with respect to a second reference input voltage and to determine whether a foreign object is present based on the final load voltage with respect to the first reference input voltage and the final load voltage with respect to the second reference input voltage.

8. The wireless power transmission apparatus of claim 7, wherein, the controller (190) is configured to determine that the foreign object is present if both the final load voltage with respect to the first reference input voltage and the final load voltage with respect to the second reference input voltage are outside a respective predetermined range, , and wherein the respective predetermined ranges are different from each other.

9. A method of driving a wireless power transmission apparatus (10) for wirelessly transmitting power to and for induction heating a target object (1), the wireless power transmission apparatus (10) including a working coil (12, 150) configured to induction-heat the target object and to wirelessly transmit power to the target object (1) depending on a selected mode, the method comprising:

upon selection of a wireless power transmission mode, a preparation operation of receiving information on a load voltage from the target object (1) while driving a wireless inverter (140) of the wireless power transmission apparatus (10) at a predetermined operation frequency, compensating for the load voltage, and determining whether a foreign object is present on the working coil (12, 150); and
a normal mode operation of wirelessly transmitting power to the target object (1).

10. The method of claim 9, wherein the compensating for the load voltage is performed based on a current input voltage, and/or the determining whether the foreign object is present is performed based on the compensated load voltage.

11. The method of claim 9 or 10, wherein the preparation operation includes determining the current input voltage as a first reference input voltage, and performing the compensation for removing variation in the load voltage with respect to the current input voltage.

12. The method of claim 9, 10 or 11, wherein the preparation operation includes compensating for an eccentricity degree between the working coil (12, 150) and a reception coil (15) of the target object (1) with respect to the compensated load voltage, and calculating a final load voltage, and wherein the determining whether the foreign object is present is based on the last load voltage.

13. The method of claim 12, wherein the preparation operation includes, when determining that the foreign object is present based on the final load voltage with respect to the first reference input voltage, additionally calculating a final load voltage with respect to a second reference input voltage and determining whether a foreign object is present based on the final load voltage with respect to the first reference input voltage and the final load voltage with respect to the second reference input voltage.

14. The method of claim 13, wherein the preparation operation includes determining that the foreign object is present if both the final load voltage with respect to the first reference input voltage and the final load voltage with respect to the second reference input voltage are outside a respective predetermined range, and wherein the respective predetermined ranges are different from each other.

15. The method of any one of claims 11 to 14, wherein the preparation operation includes:
calculating a deviation in the load voltage with respect to the first reference input voltage based on data of the load voltage of the target object (1) of a variation in the input voltage with respect to the predetermined operation frequency and calculating the compensated load voltage according to a function between the deviation in the load voltage and the input voltage, and
compensating for a value of resonance current with respect to the first reference input voltage, calculating the deviation in the compensated load voltage with respect to the eccentricity degree between the working coil (12, 150) and the reception coil (15) of the target object (1), and calculating the final load voltage according to a function between the compensated resonance current and the deviation in the compensated load voltage.

FIG. 1

FIG. 2

FIG. 3

FIG. 4

FIG. 5

1

FIG. 6

FIG. 7

```
                    ┌─────────┐
                    │  START  │
                    └────┬────┘
                         │
                         ▼                    S10
         ┌──────────────────────────────┐
         │   SELECT WIRELESS POWER       ├──────────────┐
         │     TRANSMISSION MODE         │              │
         └──────────────┬───────────────┘              │      S80
                        │                               ▼
                        │            S20   ┌──────────────────────┐
         ┌──────────────────────────────┐ │      IDLE MODE        │
         │      TARGET OBJECT            ├─┤                       │
         │    DETECTION MODE             │ └──────────▲───────────┘
         └──────────────┬───────────────┘            │
                        │                    ┌────────┘
                        ▼            S30      │
         ┌──────────────────────────────┐    │
         │       STAND-BY MODE           │    │
         └──────────────┬───────────────┘    │
                        │                     │
                        ▼            S40      │
         ┌──────────────────────────────┐    │
         │     FOREIGN OBJECT            │    │
         │    DETECTION MODE             │    │
         └──────────────┬───────────────┘    │
                        │◄───────────────────┘
                        ▼
         ┌──────────────────────────────┐
         │      SOFT START MODE          │── S50
         └──────────────┬───────────────┘
                        │
                        ▼
         ┌──────────────────────────────┐
         │    NORMAL OPERATION MODE      │── S60
         └──────────────┬───────────────┘
                        │
                        ▼
                   ┌─────────┐
                   │   END   │
                   └─────────┘
```

FIG. 8

WPT fUNCTION Key On

| DRIVE INVERTER | | | | | |
|---|---|---|---|---|---|
| | TARGET OBJECT DETECTION | ADDITIONAL DETECTION | | — | DRIVE |
| MODE OF TRANSMISSION SIDE | TARGET OBJECT DETECTION MODE | STAND-BY MODE | FIRST ADDITIONAL DETECTION MODE | SOFT START MODE | NORMAL OPERATION MODE |
| MODE OF RECEPTION SIDE | SLEEP MODE | | WAKEUP MODE | | WAKEUP MODE OR POWERING MODE |

FIG. 9

```
                      ┌─────────┐
                      │  START  │
                      └────┬────┘
                           │
              ┌────────────▼───────────┐
              │ START FOREIGN OBJECT MODE├──S100
              └────────────┬───────────┘
                           │
              ┌────────────▼───────────┐
              │ COMPENSATE FOR RESONANCE│
              │  CURRENT WITH RESPECT   │
              │  TO FIRST REFERENCE INPUT├──S110
              │  VOLTAGE AND COMPENSATE │
              │     FOR INPUT CURRENT   │
              └────────────┬───────────┘
```

COMPENSATE FOR RESONANCE CURRENT WITH RESPECT TO FIRST REFERENCE INPUT VOLTAGE AND COMPENSATE FOR INPUT CURRENT ── S110

S120
COMPENSATED RESONANCE CURRENT > COMPENSATED INPUT CURRENT? — NO

YES

COMPENSATE FOR LOAD VOLTAGE OF TARGET OBJECT WITH RESPECT TO FIRST REFERENCE INPUT VOLTAGE ── S130

COMPENSATE FOR LOAD VOLTAGE WITH RESPECT TO ECCENTRICITY ── S140

S150
V1≤FIRST LAST LOAD VOLTAGE<V2? — NO

YES

COMPENSATE FOR RESONANCE CURRENT WITH RESPECT TO SECOND REFERENCE INPUT VOLTAGE AND COMPENSATE FOR INPUT CURRENT ── S160

S170
COMPENSATED RESONANCE CURRENT > COMPENSATED INPUT CURRENT? — NO

YES

COMPENSATE FOR LOAD VOLTAGE OF TARGET OBJECT WITH RESPECT TO SECOND REFERENCE INPUT VOLTAGE AND COMPENSATE FOR ECCENTRICITY ── S180

S200
NO FOREIGN OBJECT

S140
YES — V3≤SECOND LAST LOAD VOLTAGE≤V4? — NO ── S190

S210
FOREIGN OBJECT IS PRESENT

FIG. 10A

FIG. 10B

FIG. 11A

FIG. 11B

FIG. 11C

LAST LOAD VOLTAGE

ECCENTRICITY DEGREE

Europäisches
Patentamt

European
Patent Office

Office européen
des brevets

# EUROPEAN SEARCH REPORT

**Application Number**

EP 21 15 9352

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 2015/042173 A1 (LEE BYOUNG HEE [KR] ET AL) 12 February 2015 (2015-02-12)<br>* abstract; claims; figure 1 *<br>* paragraphs [0008] - [0015], [0044] - [0051], [0122] - [0141] *<br>----- | 1-12<br><br>13-15 | INV.<br>H02J50/60<br>H05B6/10 |
| X<br>A | EP 3 125 404 A1 (CANON KK [JP])<br>1 February 2017 (2017-02-01)<br>* abstract; claim 1; figures 1-3 *<br>* paragraphs [0011] - [0021] *<br>----- | 1-12<br><br>13-15 | |
| A | WO 2014/069009 A1 (MITSUBISHI ELECTRIC CORP [JP] ET AL.) 8 May 2014 (2014-05-08)<br>* abstract; claim 1; figures 1,2,8 *<br>----- | 1-15 | |
| A | JP 2016 134355 A (MITSUBISHI ELECTRIC CORP; MITSUBISHI ELECTRIC HOME APPLIANCE CO LTD) 25 July 2016 (2016-07-25)<br>* the whole document *<br>----- | 1-15 | |

**TECHNICAL FIELDS SEARCHED (IPC)**

H02J
H05B

The present search report has been drawn up for all claims

| Place of search | Date of completion of the search | Examiner |
|---|---|---|
| Munich | 14 July 2021 | Rother, Stefan |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

    ...............................................................................

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 21 15 9352

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2021

| Patent document cited in search report | | Publication date | Patent family member(s) | | Publication date |
|---|---|---|---|---|---|
| US 2015042173 | A1 | 12-02-2015 | KR 20150018683 A | | 24-02-2015 |
| | | | US 2015042173 A1 | | 12-02-2015 |
| EP 3125404 | A1 | 01-02-2017 | EP 3125404 A1 | | 01-02-2017 |
| | | | JP 6661294 B2 | | 11-03-2020 |
| | | | JP 2017028948 A | | 02-02-2017 |
| | | | US 2017033613 A1 | | 02-02-2017 |
| WO 2014069009 | A1 | 08-05-2014 | JP 5921707 B2 | | 24-05-2016 |
| | | | JP WO2014069009 A1 | | 08-09-2016 |
| | | | WO 2014068645 A1 | | 08-05-2014 |
| | | | WO 2014069009 A1 | | 08-05-2014 |
| JP 2016134355 | A | 25-07-2016 | JP 6328572 B2 | | 23-05-2018 |
| | | | JP 2016134355 A | | 25-07-2016 |

EPO FORM P0459

For more details about this annex : see Official Journal of the European Patent Office, No. 12/82

**REFERENCES CITED IN THE DESCRIPTION**

**Patent documents cited in the description**

- KR 1020200024272
- KR 1020160123672
- KR 176449681
- US 8912686 B
- KR 20170024413 A
- KR 20170099804 A
- KR 20170024413
- KR 20170099804